# EUROPÄISCHE PATENTSCHRIFT

(11) **EP 1 809 912 B1**
(45) Veröffentlichungstag und Bekanntmachung des Hinweises auf die Patenterteilung: **10.08.2016**
(21) Anmeldenummer: 05811071.9
(22) Anmeldetag: 03.11.2005
(51) Int. Cl.: F16B 5/02, B60K 11/04, F02B 29/04, F28F 9/00

(54) **BEFESTIGUNGSSYSTEM, INSBESONDERE FÜR EINEN WÄRMEÜBERTRAGER**
FASTENING SYSTEM, ESPECIALLY FOR A HEAT EXCHANGER
SYSTEME DE FIXATION NOTAMMENT DESTINE A UN ECHANGEUR THERMIQUE

(30) Priorität: 04.11.2004 DE 102004053851
(43) Veröffentlichungstag der Anmeldung: 25.07.2007
(73) Patentinhaber: Behr Industry GmbH & Co. KG, 70469 Stuttgart (DE)
(72) Erfinder: BÜRGSTEIN, Ralph, 74385 Pleidelsheim (DE); EDELMANN, Simone, 70176 Stuttgart (DE); MEIER, Dirk, 70372 Stuttgart (DE); RICK, Andreas, 71229 Leonberg (DE)
(74) Vertreter: BRP Renaud & Partner mbB Rechtsanwälte Patentanwälte Steuerberater
(86) Internationale Anmeldenummer: PCT/EP2005/011765
(87) Internationale Veröffentlichungsnummer: WO 2006/048285

(56) Entgegenhaltungen:
- DE-A- 3 525 189
- DE-A- 19 802 497
- DE-A1- 3 018 014
- DE-A1- 10 018 001
- DE-A1- 10 315 095
- DE-A1- 19 938 571
- DE-A1- 19 952 238

## Beschreibung

Die Erfindung betrifft ein Befestigungssystem, insbesondere für einen Wärmeübertrager, gemäß dem Oberbegriff des Anspruches 1.

Ein derartiges Befestigungssystem ist aus der DE 100 18 001 A1 bekannt.

Bei der Befestigung eines Wärmeübertragers, insbesondere bei einer Kühlanlage, durch eine Anbringung desselben mittels vier Schrauben in einem Rahmen treten häufig Spannungen auf, die durch unterschiedliche Wärmeausdehnung des Wärmeübertragers und dessen Rahmen verursacht werden. Diese Spannungen können zu Rissen an den Bauteilen führen. Besonders problematisch ist die Befestigung von Wärmeübertragern in Schienenfahrzeugen auf Grund der Größe und Einbausitüation. In Folge der hohen Belastungen verringert sich die Lebensdauer erheblich.

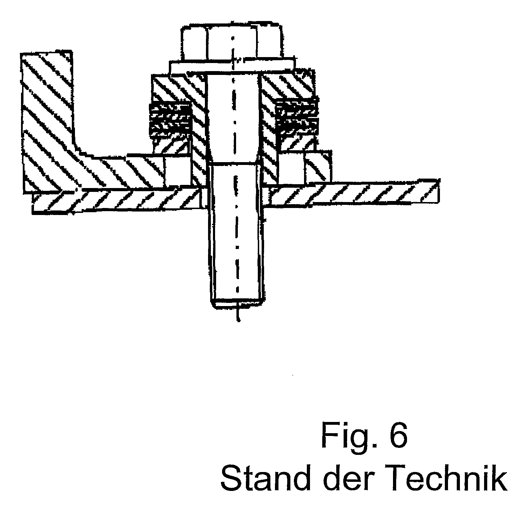

Für eine möglichst spannungsfreie Befestigung sind bei einem bekannten Wärmeübertrager (Kühler) größere Bohrungen vorgesehen, durch welche eine Schraube mit auf den Schaft geschobener Buchse, Federelementen, wie Tellerfedern und Stop-Choc-Elemente, und Unterlegscheibe gesteckt ist, wie in Fig. 6 dargestellt. Eine derartige Befestigung lässt jedoch noch Wünsche offen.

Es ist Aufgabe der Erfindung, ein Befestigungssystem zur Verfügung zu stellen, das die eingangs genannten Probleme vermeidet.

Diese Aufgabe wird gelöst durch ein Befestigungssystem mit den Merkmalen des Anspruchs 1. Vorteilhafte Ausgestaltungen sind Gegenstand der Unteransprüche.

Erfindungsgemäß ist ein Befestigungssystem, insbesondere für einen Wärmeübertrager, mit mindestens drei Befestigungseinheiten vorgesehen, die im Wesentlichen durch Schrauben gebildet sind, welche durch entsprechende Öffnungen in einem an einem zweiten Bauteil zu befestigenden ersten Bauteil gesteckt sind, wobei genau eine Befestigungseinheit als ein Festlager und die anderen Befestigungseinheiten als Loslager ausgebildet sind. Durch das Vorsehen eines Festlagers ist eine exakte Positionierung und einfache Montage möglich, die Loslager ermöglichen einen Toleranzausgleich, insbesondere auch in Hinblick auf unterschiedliche Wärmeausdehnungen der beiden Bauteile, so dass Spannungsbelastungen deutlich verringert werden können. Ferner lassen sich die Fertigungstoleranzen in Hinblick auf die Anordnung der Befestigungseinheiten, insbesondere in Hinblick auf die Winkligkeit, vergrößern.

Vorzugsweise ist ein Toleranzausgleich in Schraubeneinführrichtung vorgesehen, so dass neben der Fertigungstoleranz in Hinblick auf die Anordnung der Befestigungseinheiten auch die Toleranzen in Hinblick auf die Ebenheit der Bauteile vergrößert werden können, wodurch die Herstellungskosten unter Anderem in Folge einer geringeren Ausschussrate gesenkt werden können.

Der Toleranzausgleich in Schraubeneinführrichtung ist bevorzugt durch eine oder mehrere Federelemente, insbesondere Druckfedern, gebildet. Andere Federelemente, wie beispielsweise Tellerfedern, können ebenfalls verwendet werden. Insbesondere Druckfedern sind kostengünstig in allen Dimensionen und für die unterschiedlichsten Kräfte erhältlich und ermöglichen eine sehr große Toleranz.

Der Toleranzausgleich in Schraubeneinführrichtung ist vorzugsweise ausschließlich an den Loslagern vorgesehen, so dass durch das Festlager die Positionierung der Bauteile festgelegt wird.

Die Öffnung im ersten Bauteil am Festlager ist erfindungsgemäß durch eine Bohrung gebildet, da eine solche sehr kostengünstig und exakt positionier- und dimensionierbar herstellbar ist. Andere Öffnungsformen sind prinzipiell auch möglich.

Die Öffnung im ersten Bauteil an einem Loslager ist erfindungsgemäß durch ein Langloch mit einer größeren Längserstreckung als die Öffnung am Festlager oder durch eine Bohrung mit größerem Durchmesser als die Öffnung am Festlager gebildet. Die vergrößerten Öffnungen ermöglichen eine gewisse Verschiebung der Bauteile gegeneinander, so dass unterschiedliche Wärmeausdehnungen der beiden Bauteile kompensiert werden können, wodurch keine Spannungen auftreten.

Vorzugsweise weist die Befestigungseinheit, die am Festlager vorgesehen ist, neben der Schraube eine auf den Schraubenschaft geschobene Hülse oder Buchse auf, die mit ihrem Ende am ersten Bauteil anliegt. Die Hülse oder Buchse ermöglicht auf Grund ihrer Elastizität einen Ausgleich gegen ein Setzen und dient somit der Sicherung gegen ein Lösen der Schraubverbindung.

Die Befestigungseinheit, die an einem Loslager vorgesehen ist, weist vorzugsweise neben der Schraube eine auf den Schraubenschaft geschobene Hülse oder Buchse und ein auf die Hülse bzw. Buchse aufgeschobenes Federelement, insbesondere eine Druckfeder, auf. Dabei liegt die auf den Schraubenschaft geschobene Hülse oder Buchse vorzugsweise mit ihrem vom Schraubenkopf beabstandeten Ende an dem zweiten Bauteil an, so dass die Schraube und die Hülse oder Buchse fest mit dem zweiten Bauteil verbunden sind, während das erste Bauteil durch die Federkraft gegen das zweite Bauteil gepresst wird, jedoch in Folge der vergrößerten Öffnung, durch welche die Schraube und die Hülse oder Buchse ragt, relativ hierzu verschiebbar ist.

Bevorzugt sind die Schrauben in ein Gegenelement eingeschraubt, welches getrennt vom zweiten Bauteil ausgebildet ist, bevorzugt aber mittels Einnieten oder auf sonstige Weise fest mit demselben verbunden ist, so dass die Teileanzahl verringert und eine Montage auch bei einer beschränkten Zugänglichkeit der Rückseite des zweiten Bauteils möglich ist. Insbesondere geeignet sind Einnietmuttern. Dadurch, dass das Gegenelement aus einem anderen Material bestehen kann, vergrößert sich die Auswahl an Materialien für das zweite Bauteil, da auf die Festigkeit für ein Gewinde keine Rücksicht genommen werden muss. Die Ausgestaltungen können in Abhängigkeit der entsprechenden Festigkeiten gewählt werden.

Vorzugsweise ermöglichen die Befestigungseinheiten, die einen Toleranzausgleich in Schraubeneinführrichtung aufweisen, auch eine Verschiebung senkrecht zur Schraubeneinführrichtung für einen Ausgleich der Wärmeausdehnung.

Erfindungsgemäß sind neben dem einen Festlager drei Loslager vorgesehen, so dass eine optimale, sichere und bevorzugt auch normgerechte Befestigung der Bauteile aneinander möglich ist.

Das Festlager ist bevorzugt oben angeordnet.

Ein derartiges Befestigungssystem für Wärmeübertrager wird vorzugsweise für Kühler, insbesondere bei Schienenfahrzeugen, verwendet.

Im Folgenden wird die Erfindung anhand eines Ausführungsbeispiels unter Bezugnahme auf die Zeichnung im Detail erläutert. In der Zeichnung zeigen:
- Fig. 1: eine perspektivische Explosionsdarstellung eines Befestigungssystems für einen Kühler zur Befestigung desselben an einem Rahmen gemäß dem Ausführungsbeispiel,
- Fig. 2: das Befestigungssystem von Fig. 1 in einer perspektivischen zusammengebauten Darstellung,
- Fig. 3: eine Ansicht des Kühlers in Richtung des Pfeils III von Fig. 1 mit durch Pfeile schematisch dargestelltem Spiel der drei Loslager,
- Fig. 4: einen Schnitt durch das Festlager,
- Fig. 5: einen Schnitt durch ein Loslager, und
- Fig. 6: einen Schnitt durch eine Befestigung gemäß dem Stand der Technik.

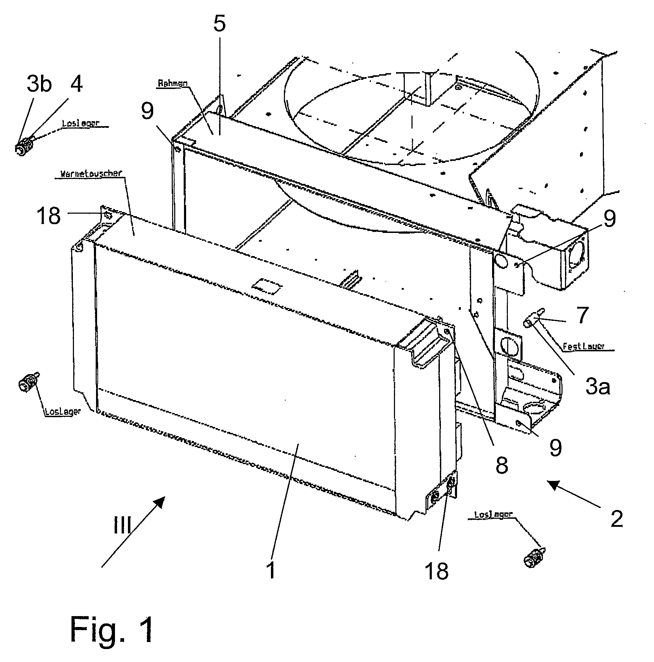

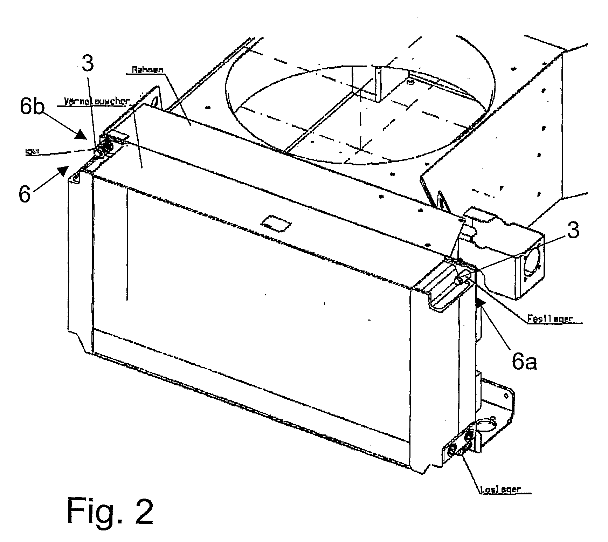

Ein Wärmeübertrager, vorliegend ein Kühler 1 eines Schienenfahrzeugs, ist mittels eines Befestigungssystems 2, welches im Wesentlichen vier Schrauben 3 und drei dreien der vier Schrauben 3 zugeordnete Federelemente 4 umfasst, an einem Rahmen 5 angebracht. Das Befestigungssystem 2 besteht somit aus vier Befestigungseinheiten 6, die, wie aus den Figuren 1 bis 3 ersichtlich, an den vier Ecken des Kühlers 1 und des Rahmens 5 angeordnet sind.

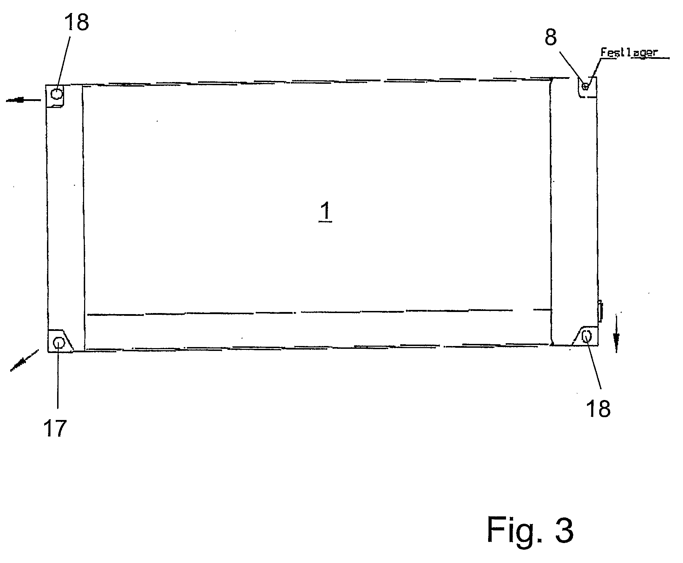

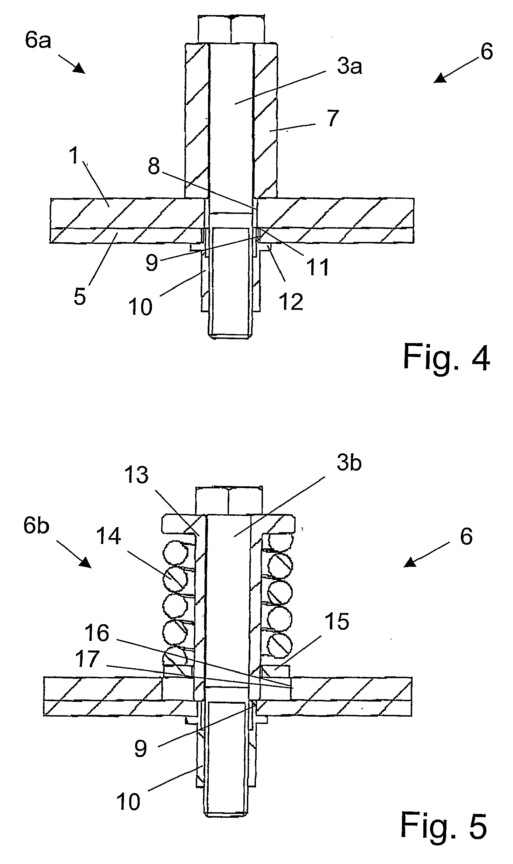

Vorliegend bildet die Befestigungseinheit 6, die in den Figuren 1 bis 3 rechts oben und in Fig. 4 dargestellt ist, ein Festlager 6a, bei welchem kein oder nur ein geringes Spiel im Rahmen der Toleranzen vorgesehen ist, während es sich bei den anderen drei Befestigungseinheiten 6 um Loslager 6b handelt, welche einen Toleranzausgleich in Folge von Unebenheiten des Rahmens 5 und/oder des Kühlers 1 und ein Spiel in die in Fig. 3 durch Pfeile dargestellte Richtungen für eine unterschiedliche Wärmeausdehnung von Kühler 1 und Rahmen 5 aufweisen.

Die das Festlager 6a bildende Befestigungseinheit 6 ist in Fig. 4 im Detail dargestellt. Hierbei ist eine erste Schraube 3a durch eine Hülse 7 gesteckt, die an ihrem dem Schraubenkopf gegenüberliegenden Ende an dem Randbereich einer Öffnung oder Bohrung 8 im Kühler 1 anliegt. Die Bohrung 8 hat einen etwas größeren Innendurchmesser als der Schaftdurchmesser der Schraube 3a. Mit der Bohrung 8 fluchtend ist im Rahmen 5 eine weitere Bohrung 9 vorgesehen, in welche ein als Mutter dienendes mit einem Innengewinde versehenes Gegenelement 10 - vorliegend eine Einnietmutter - mit einem Endbereich 11 ragt, wobei der Endbereich 11 innengewindefrei ist und einen größeren Innendurchmesser als der Schaftdurchmesser der Schraube 3a aufweist. Dabei entspricht der Innendurchmesser etwa dem Innendurchmesser der Bohrung 8 im Kühler 1. Herstellungsbedingt ist ein Wulst 12, der am Rahmen 5 anliegt, am Gegenelement 10 vorgesehen. Das Innengewinde des Gegenelements 10 beginnt erst nach dem Wulst 12 (vgl. Fig. 4). An Stelle des hier beschriebenen Gegenelements 10 kann auch eine herkömmliche Mutter verwendet werden.

Eine eines der drei Loslager 6b bildende Befestigungseinheit 6 ist in Fig. 5 im Detail dargestellt. Hierbei ist eine Schraube 3b, welche vorliegend den gleichen Durchmesser wie die Schraube 3a der Befestigungseinheit 6 am Festlager 6a hat, jedoch aus einem Material gefertigt ist, das eine größere Elastizität hat, durch eine Buchse 13 gesteckt, auf welche das Federelement 4, vorliegend eine Druckfeder 14, gesteckt ist, wobei der Innendurchmesser der Druckfeder 14 ausreichend größer als der Außendurchmesser der Buchse 13 ist. Nach der Druckfeder 14 ist eine Unterlegscheibe 15 angeordnet, die mit ihrer der Druckfeder 14 gegenüberliegenden Seite an dem Randbereich der entsprechenden Öffnung 16 im Kühler 1 anliegt. Die Öffnung 16 wird vorliegend durch eine Bohrung 17 gebildet und hat einen deutlich größeren Innendurchmesser als der Schaftdurchmesser der Schraube 3b und der Außendurchmesser der Buchse 13. Die Buchse 13 ragt durch die Unterlegscheibe 15 und die Bohrung 17 und liegt am Rahmen 5 an. Mit der Bohrung 17 im dargestellten Zustand fluchtend ist im Rahmen 5 eine Bohrung 9 vorgesehen, die der Bohrung 9 beim Festlager 6a entspricht, in welche - ebenfalls entsprechend wie beim Festlager 6a - ein Gegenelement 10 (Einnietmutter) mit einem Endbereich 11 ragt.

Durch das Vorsehen des Federelements 4 ist ein Toleranzausgleich von Unebenheiten des Kühlers 1 und/oder des Rahmens 5 möglich. Durch die Ausgestaltung der Öffnungen 16 ist ein Ausgleich von unterschiedlichen Wärmeausdehnungen des Kühlers 1 und des Rahmens 5 in Richtung der Pfeile von Fig. 3 möglich, wobei im Bereich des Festlagers 6a keine Verschiebung des Kühlers 1 gegenüber dem Rahmen 5 möglich ist.

Die Öffnungen 16 an den beiden anderen Ecken sind als Langlöcher 18 (vgl. Fig. 3) ausgebildet, so dass im Wesentlichen nur eine Längsverschiebung für einen Ausgleich der Wärmeausdehnung möglich ist, wobei ein Schnitt durch eines der Loslager 6b entlang der Längsachse des Langlochs 18 entsprechend Fig. 5 aussieht.

## Patentansprüche

1. Befestigungssystem, insbesondere für einen Wärmeübertrager,
- mit vier Befestigungseinheiten (6), die im Wesentlichen durch Schrauben (3a, 3b) gebildet sind, welche durch entsprechende Öffnungen (8, 17, 18) in einem an einem zweiten Bauteil zu befestigenden ersten Bauteil gesteckt sind,
- wobei eine Befestigungseinheit (6) als ein Festlager (6a) ausgebildet ist,
- wobei die vier Befestigungseinheiten (6) an vier Ecken der Bauteile angeordnet sind,
- wobei die Öffnung am Festlager (6a) durch eine Bohrung (8) gebildet ist,
**dadurch gekennzeichnet,**
- **dass** genau eine Befestigungseinheit (6) als ein Festlager (6a) und die anderen drei Befestigungseinheiten (6) als Loslager (6b) ausgebildet sind,
- **dass** die Öffnung am ersten und am zweiten Loslager (6b) jeweils durch ein Langloch (18) mit einer größeren Längserstreckung als die Öffnung (8) am Festlager (6a) gebildet ist,
- **dass** die Öffnung am dritten Loslager (6b) durch eine Bohrung (17) mit größerem Durchmesser als die Öffnung (8) am Festlager (6a) gebildet ist,
- **dass** auf einer ersten Diagonalen des durch die vier Ecken gebildeten Vierecks die Langlöcher (18) des ersten und zweiten Loslagers (6b) und auf einer zweiten Diagonalen dieses Vierecks die Öffnungen (8, 17) des dritten Loslagers (6b) und des Festlagers (6a) angeordnet sind,
- **dass** die beiden Langlöcher (18) hinsichtlich ihrer Längserstreckungen so angeordnet sind, dass sich Längsrichtungen der beiden Langlöcher (18) im Bereich des Festlagers (6a) schneiden.

2. Befestigungssystem nach Anspruch 1, **dadurch gekennzeichnet, dass** ein Toleranzausgleich in Schraubeneinführrichtung vorgesehen ist.

3. Befestigungssystem nach Anspruch 2, **dadurch gekennzeichnet, dass** der Toleranzausgleich in Schraubeneinführrichtung durch eine oder mehrere Federelemente (4), insbesondere Druckfedern, gebildet ist.

4. Befestigungssystem nach einem der vorhergehenden Ansprüche, **dadurch gekennzeichnet, dass** ein Toleranzausgleich in Schraubeneinführrichtung ausschließlich an den Loslagern (6b) vorgesehen ist.

5. Befestigungssystem nach einem der vorhergehenden Ansprüche, **dadurch gekennzeichnet, dass** die Befestigungseinheit (6), die am Festlager (6a) vorgesehen ist, neben der Schraube (3a) eine auf den Schraubenschaft geschobene Hülse (7) oder Buchse aufweist, die mit ihrem Ende am ersten Bauteil anliegt.

6. Befestigungssystem nach einem der vorhergehenden Ansprüche, **dadurch gekennzeichnet, dass** die Befestigungseinheit (6), die an einem Loslager (6b) vorgesehen ist, neben der Schraube (3b) eine auf den Schraubenschaft geschobene Hülse oder Buchse (13) und ein auf die Hülse bzw. Buchse (13) aufgeschobenes Federelement (4), insbesondere eine Druckfeder (14), aufweist.

7. Befestigungssystem nach Anspruch 6, **dadurch gekennzeichnet, dass** die auf den Schraubenschaft geschobene Hülse oder Buchse (13) mit ihrem Ende an dem zweiten Bauteil anliegt.

8. Befestigungssystem nach einem der vorhergehenden Ansprüche, **dadurch gekennzeichnet, dass** die Befestigungseinheiten (6) am Festlager (6a) und an den Loslagern (6b) Schrauben (3a, 3b) mit unterschiedlicher Elastizität aufweisen.

9. Befestigungssystem nach Anspruch 8, **dadurch gekennzeichnet, dass** die Schraube (3a) am Festlager (6a) eine geringere Elastizität aufweist als die Schrauben (3b) an den Loslagern (6b).

10. Befestigungssystem nach einem der vorhergehenden Ansprüche, **dadurch gekennzeichnet, dass** die Schraube (3) in eine Einnietmutter eingeschraubt ist, welche in das zweite Bauteil eingenietet ist.

11. Befestigungssystem nach einem der vorhergehenden Ansprüche, **dadurch gekennzeichnet, dass** die Befestigungseinheiten (6), die einen Toleranzausgleich in Schraubeneinführrichtung aufweisen, auch eine Verschiebung senkrecht zur Schraubeneinführrichtung für einen Ausgleich der Wärmeausdehnung ermöglichen.

12. Befestigungssystem nach einem der vorhergehenden Ansprüche, **dadurch gekennzeichnet, dass** das Festlager (6a) oben angeordnet ist.

## Claims

1. Fastening system, in particular for a heat exchanger, comprising
- four fastening units (6) essentially formed by screws (3a, 3b) which are inserted through corresponding openings (8, 17, 18) in a first component to be fastened to a second component,
- wherein one fastening unit (6) is configured as a fixed bearing (6a),
- wherein the four fastening units (6) are positioned at four corners of the components,
- wherein the opening on the fixed bearing (6a) is formed by a bore (8), **characterized in that**
- one fastening unit (6) is configured as a fixed bearing (6a) and the other three fastening units (6) are configured as floating bearings (6b),
- the opening on the first and second floating bearings (6b) are each formed by an elongated hole (18) with a greater longitudinal extent than the opening (8) on the fixed bearing (6a),
- the opening on the third floating bearing (6b) is formed by a bore (17) with a larger diameter than the opening (8) on the fixed bearing (6a),
- the elongated holes (18) of the first and second floating bearings (6b) are positioned on a first diagonal of the rectangle formed by the four corners, and the openings (8, 17) of the third floating bearing (6b) and the fixed bearing (6a) are positioned on a second diagonal of the same rectangle,
- the two elongated holes (18) are positioned in relation to their longitudinal extent such that the longitudinal directions of the two elongated holes (18) intersect in the area of the fixed bearing (6a).

2. Fastening system according to claim 1, **characterized in that** a tolerance compensation is provided in the screw insertion direction.

3. Fastening system according to claim 2, **characterized in that** the tolerance compensation in the screw insertion direction is formed by one or more spring elements (4), in particular compression springs.

4. Fastening system according to any of the preceding claims, **characterized in that** a tolerance compensation in the screw insertion direction is provided exclusively at the floating bearings (6b).

5. Fastening system according to any of the preceding claims, **characterized in that** the fastening unit (6) provided on the fixed bearing (6a) comprises in addition to the screw (3a) a sleeve (7) or a bushing which is pushed onto the screw shank and is with its end in contact with the first component.

6. Fastening system according to any of the preceding claims, **characterized in that** the fastening unit (6) provided on a floating bearing (6b) comprises in addition to the screw (3b) a sleeve or a bushing (13) which is pushed onto the screw shank, and a spring element (4), in particular a compression spring (14), which is pushed onto the sleeve or bushing (13), respectively.

7. Fastening system according to claim 6, **characterized in that** the sleeve or bushing (13) is pushed onto the screw shank with its end in contact with the second component.

8. Fastening system according to any of the preceding claims, **characterized in that** the fastening units (6) on the fixed bearing (6a) and the floating bearings (6b) have screws (3a, 3b) with differing elasticity.

9. Fastening system according to claim 8, **characterized in that** the screw (3a) on the fixed bearing (6a) has a lower elasticity than the screws (3b) on the floating bearings (6b).

10. Fastening system according to any of the preceding claims, **characterized in that** the screw (3) is screwed into a rivet nut which is riveted into the second component.

11. Fastening system according to any of the preceding claims, **characterized in that** the fastening units (6) which have a tolerance compensation in the screw insertion direction also permit a displacement perpendicular to the screw insertion direction in order to compensate for the thermal expansion.

12. Fastening system according to any of the preceding claims, **characterized in that** the fixed bearing (6a) is arranged at the top.

## Revendications

1. Système de fixation, en particulier pour un échangeur de chaleur,
- comprenant quatre unités de fixation (6), qui sont formées sensiblement par des vis (3a, 3b), qui sont enfichées dans un premier composant à fixer au niveau d'un deuxième composant par des ouvertures (8, 17, 18) correspondantes,
- dans lequel une unité de fixation (6) est réalisée sous la forme d'un palier fixe (6a),
- dans lequel les quatre unités de fixation (6) sont disposées au niveau de quatre angles des composants,
- dans lequel l'ouverture est formée au niveau du palier fixe (6a) par un alésage (8), **caractérisé en ce**
- **que** précisément une unité de fixation (6) est réalisée sous la forme d'un palier fixe (6a) et les autres trois unités de fixation (6) sont réalisées sous la forme d'un palier libre (6b),
- **que** l'ouverture est formée au niveau du premier et au niveau du deuxième palier libre (6b) respectivement par un trou oblong (18) présentant une extension longitudinale plus grande que celle de l'ouverture (8) au niveau du palier fixe (6a),
- **que** l'ouverture est formée au niveau du troisième palier libre (6b) par un alésage (17) présentant un diamètre plus grand que celui de l'ouverture (8) au niveau du palier fixe (6a),
- **que** les trous oblongs (18) du premier et du deuxième palier libre (6b) sont disposés sur une première diagonale du quadrilatère formé par les autres angles et les ouvertures (8, 17) du troisième palier libre (6b) et du palier fixe (6a) sont disposées sur une deuxième diagonale dudit quadrilatère,
- **que** les deux trous oblongs (18) sont disposés eu égard à leurs extensions longitudinales de telle sorte que des directions longitudinales des deux trous oblongs (18) se coupent dans la zone du palier fixe (6a).

2. Système de fixation selon la revendication 1, **caractérisé en ce qu'**une compensation de tolérance est prévue dans le sens d'introduction des vis.

3. Système de fixation selon la revendication 2, **caractérisé en ce que** la compensation de tolérance dans le sens d'introduction des vis est formée par un ou plusieurs éléments formant ressorts (4), en particulier par des ressorts de pression.

4. Système de fixation selon l'une quelconque des revendications précédentes, **caractérisé en ce qu'**une compensation de tolérance dans le sens d'introduction des vis est prévue exclusivement au niveau des paliers libres (6b).

5. Système de fixation selon l'une quelconque des revendications précédentes, **caractérisé en ce que** l'unité de fixation (6), qui est prévue au niveau du palier fixe (6a), présente, outre la vis (3a), un manchon (7) ou une douille glissé/glissée sur la tige de vis, qui repose, par son extrémité, au niveau du premier composant.

6. Système de fixation selon l'une quelconque des revendications précédentes, **caractérisé en ce que** l'unité de fixation (6), qui est prévue au niveau d'un palier libre (6b), présente, outre la vis (3b), un manchon ou une douille (13) glissé/glissée sur la tige de vis et un élément formant ressort (4) enfilé sur le manchon ou la douille (13), en particulier un ressort de pression (14).

7. Système de fixation selon la revendication 6, **caractérisé en ce que** le manchon ou la douille (13) glissé/glissée sur la tige de vis repose, par son extrémité, au niveau du deuxième composant.

8. Système de fixation selon l'une quelconque des revendications précédentes,
**caractérisé en ce que** les unités de fixation (6) présentent, au niveau du palier fixe (6a) et au niveau des paliers libres (6b), des vis (3a, 3b) présentant une élasticité différente.

9. Système de fixation selon la revendication 8, **caractérisé en ce que** la vis (3a) au niveau du palier fixe (6a) présente une élasticité inférieure à celle de la vis (3b) au niveau des paliers libres (6b).

10. Système de fixation selon l'une quelconque des revendications précédentes,
**caractérisé en ce que** la vis (3) est insérée par vissage dans un écrou d'insertion par rivetage, qui est inséré par rivetage dans le deuxième composant.

11. Système de fixation selon l'une quelconque des revendications précédentes, **caractérisé en ce que** les unités de fixation (6), qui présentent une compensation de tolérance dans le sens d'introduction de vis, permettent également un déplacement par coulissement de manière perpendiculaire par rapport au sens d'introduction de vis pour une compensation de la dilatation thermique.

12. Système de fixation selon l'une quelconque des revendications précédentes, **caractérisé en ce que** le palier fixe (6a) est disposé en haut.
